# EUROPEAN PATENT APPLICATION

(11) **EP 1 072 992 A2**
(43) Date of publication of application: **31.01.2001**
(21) Application number: 00303918.7
(22) Date of filing: 10.05.2000
(51) Int. Cl.: G06F 17/60

(54) **Computer system for creating appointment itineraries**

(30) Priority: 28.07.1999 GB 9917707
(71) Applicant: International Computers Ltd., London, EC2A 1SL (GB)
(72) Inventor: Bunyan, Roy James, Eversley, Hook, Hampshire RG27 0PT (GB); Stokes, Christopher John, Bracknell, Berkshire RG42 3SH (GB); Tull, Graham, Slough, Berkshire SL1 2GD (GB)
(74) Representative: Guyatt, Derek Charles

(57) **Abstract**

A computer system arranges itineraries of appointments for customers, for example arranging appointments for a person wishing to purchase a property (real estate) to visit a series of potential properties. The system liaises with several third parties to agree tentative appointment dates and times, e.g. to visit properties, based on criteria specified by the customer. The system then consolidates these tentative dates and times to produce an itinerary for the customer, providing sufficient time to conduct each appointment and travel to the next location.

## Description

### Background to the invention

This invention relates to a computer system for creating customised itineraries of appointments.

There is often a need for people to arrange a series of appointments with various parties in different locations within a defined timeframe. For example a person wishing to purchase a property (real estate) will wish to organise visits to a number of suitable properties being sold by a number of estate agents (realty agents).

One objective of the invention is to facilitate this process.

### Summary of the invention

According to the invention, there is provided a computer system for arranging an itinerary of appointments in a plurality of locations with a plurality of parties, on behalf of a user. The computer system comprises:
(a) means for sending requests for appointments to the parties;
(b) means for receiving replies from the parties, the replies containing proposed dates and times for the appointments; and
(c) means for compiling an itinerary of appointments for the user, based on the replies from the parties.

It can be seen that the invention thus automates the process of liaising with the parties to arrange appointments, and automatically compiles an itinerary for the user.

### Brief description of the drawings

Figure 1 is a block diagram of a computer system embodying the invention.
Figure 2 is a flow chart showing the operation of the system.

### Description of an embodiment of the invention

One embodiment of the invention will now be described by way of example with reference to the accompanying drawings.

The embodiment of the invention to be described relates to a computer system for prospective property (real estate) purchasers to arrange visits to a number of properties being marketed by a number of estate agents.

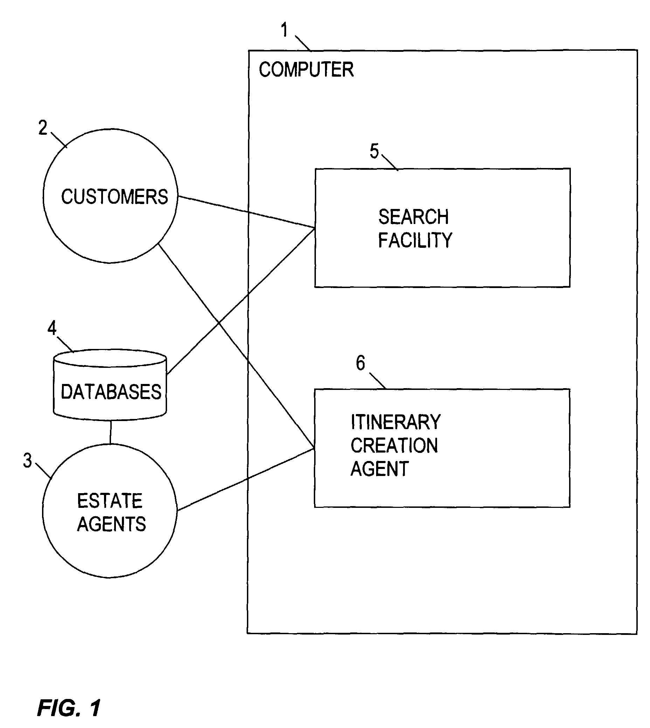

Figure 1 shows a computer system 1, which provides a service to a number of customers 2. The system also interfaces with a number of estate agents 3 who maintain databases 4 of property details, in a format capable of being read remotely by the computer system. Alternatively, these databases can be consolidated together in a central location and accessed remotely by the estate agents.

The computer system 1 comprises two main software components: a property search facility 5, which enables the customer to find details of properties, and an itinerary creation agent 6, which arranges a series of appointments for the customer to visit properties.

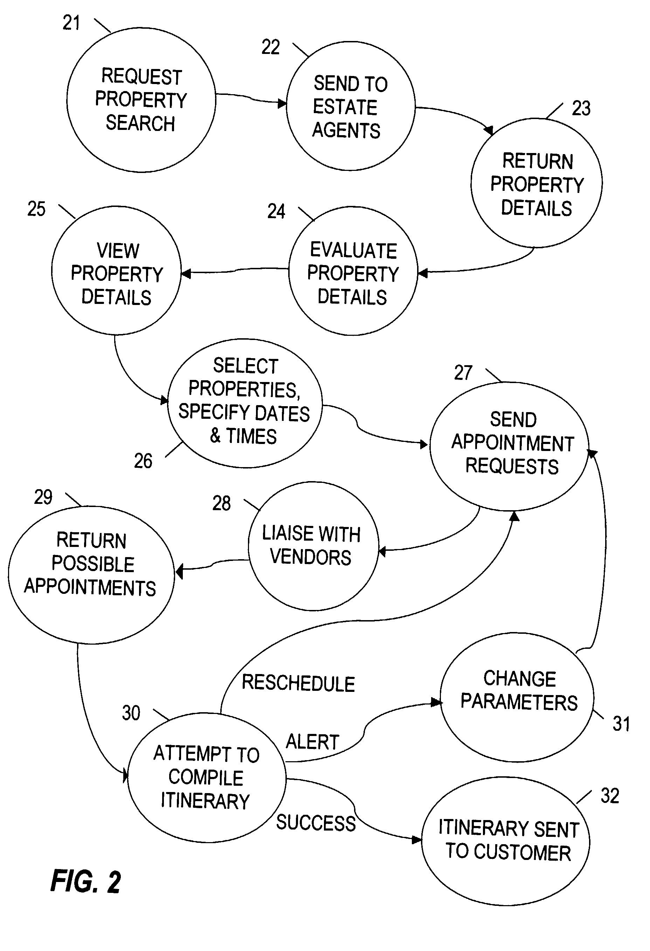

The operation of the computer system will now be described by reference to Figure 2.
(step 21) Customers wishing to purchase a property can access the search facility 5, and request a search for appropriate properties. The customers can specify various criteria for the search, such as location, property type, price and features. In the present example, the customers access the computer system over the Internet, using conventional browser software running on the customers' personal computers (PCs).
(step 22) The search facility 5 sends the property search request to the relevant estate agents for the area concerned, by electronic mail or by any other convenient means.
(step 23) The estate agents identify appropriate properties and send details back to the search facility. Alternatively, this process can be automated, with the search facility finding appropriate properties from the estate agent databases 4.
(step 24) The search facility 5 evaluates the property details returned by the estate agents against the search criteria entered by the customer at step 21, to eliminate any that are unsuitable and/or to provide a ranking or measure of suitability.
(step 25) The customer views the details of the properties provided by the search facility.
(step 26) From the properties displayed, the customer selects those they would like to visit, and indicates the date (or dates) and time (or times) that would be convenient for them.
(step 27) The itinerary creation agent 6 then sends requests for appointments to the estate agents, e.g. by electronic mail. Each request indicates the preferred date (or dates) and time (or times).
(step 28) The estate agents liaise with the vendors of the properties to determine available dates and times for appointments. This step may not be required if, for example, the estate agent has agreed visiting arrangements with the vendors in advance.
(step 29) The estate agents respond to the itinerary creation agent, e.g. by electronic mail, with appropriate dates and times.
(step 30) The itinerary creation agent 6 then attempts to compile an itinerary based on the responses from the estate agents and the distances between the properties, to enable the customer to visit each property in turn on the selected date or dates, allowing sufficient time to conduct each appointment and travel to the next location. If it is not possible to compile such an itinerary, the itinerary creation agent may return to Step 27, to send additional requests to estate agents in an attempt to reschedule one or more appointments so as to resolve any conflicts.
(step 31) If it is not possible to resolve all conflicts, the itinerary creation agent sends an alert to the customer who can then change the request parameters, e.g. to provide alternative or additional dates and times for the visits.
(step 32) If the itinerary creation agent successfully compiles an itinerary, it sends this to the customer, advantageously together with a map showing the locations of the properties and/or directions between the properties.

### Some Possible Modifications

It will be appreciated that many modifications may be made to the system described above without departing from the scope of the present invention.

Communications with the parties concerned could be made using different delivery channels, such as facsimile or interactive television.

The system could be modified to arrange appointments for salesmen, visiting a series of locations at various dates and times for sales presentations.

The set of appointments to be arranged could be generated by a computer system rather than being manually selected by a customer.

## Claims

1. A computer system for arranging an itinerary of appointments in a plurality of locations with a plurality of parties, on behalf of a user, the system comprising:
(a) means for sending requests for appointments to the parties;
(b) means for receiving replies from the parties, the replies containing proposed dates and times for the appointments; and
(c) means for compiling an itinerary of appointments for the user, based on the replies from the parties.

2. A computer system according to Claim 1, further including means for automatically sending further requests to the parties, in the event that it proves impossible to compile a suitable itinerary on the basis of the replies from the parties because of one or more conflicts, said further requests requesting rescheduling of one or more of the appointments in an attempt to resolve the conflicts.

3. A computer system according to Claim 2 further including means for automatically sending an alert message to the user in the event that it is not possible to resolve all the conflicts.

4. A computer system according to any preceding claim wherein the requests to the parties, and the replies from the parties, are sent by electronic mail.

5. A computer system according to any preceding claim, wherein the parties are estate agents, and the user is a prospective purchaser, and the appointments are appointments to view properties.

6. A method for arranging an itinerary of appointments in a plurality of locations with a plurality of parties, on behalf of a user, the method comprising:
(a) operating a computer system to send requests for appointments to the parties;
(b) operating the computer system to receive replies from the parties, the replies containing proposed dates and times for the appointments; and
(c) operating the computer system to compile an itinerary of appointments for the user, based on the replies from the parties.

7. A method according to Claim 6 including the further step of automatically sending further requests to the parties, in the event that it proves impossible to compile a suitable itinerary on the basis of the replies from the parties because of one or more conflicts, said further requests requesting rescheduling of one or more of the appointments in an attempt to resolve the conflicts.

8. A method according to Claim 7 including the further step of automatically sending an alert message to the user in the event that it is not possible to resolve all the conflicts.

9. A method according to any of Claims 6 to 8 wherein the requests to the parties, and the replies from the parties, are sent by electronic mail.

10. A method according to any of Claims 6 to 9, wherein the parties are estate agents, and the user is a prospective purchaser, and the appointments are appointments to view properties.

11. A computer program comprising code adapted to perform, when said program is run on a computer system, a method according to any of Claims 6 to 10.
